# FASCICULE DE BREVET EUROPEEN

(11) **EP 3 658 795 B1**
(45) Date de publication et mention de la délivrance du brevet: **18.08.2021**
(21) Numéro de dépôt: 18746882.2
(22) Date de dépôt: 24.07.2018
(51) Int. Cl.: F16D 65/00, F16D 66/02

(54) **DISPOSITIF D'INSPECTION DE L'ÉTAT D'USURE D'UNE PLAQUETTE DE FREIN**
VORRICHTUNG ZUR PRÜFUNG DES VERSCHLEISSZUSTANDS EINES BREMSBELAGS
DEVICE FOR INSPECTING THE STATE OF WEAR OF A BRAKE PAD

(30) Priorité: 25.07.2017 FR 1757044
(43) Date de publication de la demande: 03.06.2020
(73) Titulaire: Norauto France, 59262 Sainghin-en-Mélantois (FR)
(72) Inventeur: CHAVATTE, Franck, 59155 Faches Thumesnil (FR); ALVES, Anthony, 62400 Locon (FR); MARCINKOWSKI, Jean-Luc, 60590 Boutencourt (FR)
(74) Mandataire: Touroude, Magali Linda
(86) Numéro de dépôt international: PCT/EP2018/070075
(87) Numéro de publication internationale: WO 2019/020650

(56) Documents cités:
- GB-A- 2 467 795
- US-A1- 2017 002 884

## Description

### DOMAINE DE L'INVENTION

La présente invention est relative à la maintenance et à l'entretien dans le domaine des transports. L'invention concerne plus particulièrement un dispositif de mesure d'usure de plaquette de frein.

### ARRIERE-PLAN TECHNOLOGIQUE

Dans le domaine de la maintenance automobile, le système de freinage d'un véhicule est un élément essentiel à inspecter.

En particulier, des pièces d'usure telles que des disques de frein, des plaquettes de frein, et notamment des garnitures de plaquettes de frein sont à contrôler régulièrement et soigneusement.

La garniture d'une plaquette de frein est la partie directement au contact du disque de frein lors du freinage. Cette garniture coopère donc par frottement avec le disque de manière à garantir un freinage efficace. Ce frottement entraîne une usure de la garniture. Cette garniture est généralement toujours solidaire d'un support ou d'une embase qui sert au montage de la plaquette au sein des étriers de frein.

La plaquette comprend au moins l'embase et la garniture. La garniture est le seul élément d'usure de la plaquette.

Par conséquent, l'usure d'une plaquette de frein correspond à l'usure de la garniture de cette plaquette, et il est fait dans la suite référence à l'usure d'une plaquette ou d'une garniture indifféremment.

Il existe deux types de contrôle d'usure des plaquettes de frein.

Un premier type de contrôle d'usure des plaquettes peut se faire par l'intermédiaire de systèmes de contrôle embarqués. De tels systèmes embarqués sont destinés à prévenir un utilisateur du véhicule d'une usure limite des plaquettes lors de l'utilisation du véhicule. Ces systèmes peuvent mesurer une course ou un débattement entre la surface de la garniture et la surface du disque de frein en regard. Ces systèmes peuvent être configurés pour alerter un conducteur au-delà d'une course trop longue, correspondant à une épaisseur de garniture trop faible, de sorte à ce que le conducteur soit informé de la nécessité de changer les plaquettes de frein.

La mesure d'usure se fait lors d'une phase de freinage. C'est une mesure dynamique.

Ce premier type de contrôle d'usure embarqué, par nature, est spécifique à un système de freinage d'un véhicule. Il requiert une intégration et/ou une adaptation au système de freinage, ce qui présente un coût supplémentaire.

Un deuxième type de contrôle d'usure des plaquettes peut se faire par l'intermédiaire de systèmes de contrôle externes.

De tels systèmes externes sont utilisés lors de contrôles réguliers, en atelier ou en centre d'entretien automobile par exemple.

Ces systèmes peuvent mesurer une épaisseur de garniture de la plaquette de frein par exemple.

La mesure est ponctuelle et se fait lorsque le véhicule est à l'arrêt. C'est une mesure statique.

Un pied à coulisse ou « palmer » peut être classiquement utilisé pour mesurer mécaniquement l'épaisseur de la garniture. Cette mesure nécessite cependant d'isoler la plaquette de frein et requiert par conséquent au moins une étape de démontage de la roue et de la plaquette, puis, après la mesure, une étape de remontage de la plaquette ou d'une autre plaquette (selon l'état d'usure) et de la roue.

Alternativement, l'utilisation d'un endoscope pour le diagnostic automobile peut permettre de contrôler in situ l'état d'usure d'une plaquette de frein. La plaquette peut ainsi être visualisée par cet endoscope sans qu'il ne soit nécessaire de démonter la roue et/ou la plaquette.

Un inconvénient de cet endoscope est qu'une évaluation de l'état d'usure de la plaquette est uniquement basée sur un contrôle visuel.

Le document GB2467795A montre un dispositif pour déterminer l'état de détérioration d'un disque de frein.

Un objet de la présente invention est de pallier cet inconvénient.

En particulier, un objet de la présente invention est de proposer un dispositif amélioré d'évaluation de l'état d'usure d'une plaquette de frein ne nécessitant pas de dépose de la roue et/ou d'une partie du système de freinage.

### RESUME DE L'INVENTION

Un premier aspect de l'invention concerne un dispositif destiné à évaluer un état d'usure d'au moins une plaquette de frein.

Avantageusement le dispositif comprend une tête de lecture s'étendant selon un axe longitudinal, ladite tête de lecture comprenant au niveau d'une portion distale :
- un dispositif d'émission configuré pour émettre perpendiculairement à l'axe longitudinal au moins un faisceau lumineux en direction d'une zone de mesure, ledit au moins un faisceau lumineux formant au moins un repère de limite d'usure,
- au moins un élément configuré pour former un repère de référence, ledit repère de référence étant distant du repère de limite d'usure d'une distance dₗᵢₘ prise selon l'axe longitudinal.

Le dispositif peut ainsi être glissé au travers d'un ajournement d'une jante sans qu'il ne soit nécessaire de démonter la roue, afin d'atteindre la zone de mesure à proximité de la plaquette de frein.

La distance limite dₗᵢₘ correspond avantageusement à une limite d'usure au-delà de laquelle la plaquette de frein est à changer.

Cette distance limite dₗᵢₘ est à comparer de préférence à une distance d entre une première surface de contact du disque de frein et une première surface de contact de la garniture en regard de la première surface de contact du disque de frein.

Pour ce faire, la tête de lecture comprend avantageusement un élément configuré pour former un repère de référence à aligner avec cette première surface de contact du disque de frein.

Le dispositif est donc particulièrement simple d'utilisation.

En effet, dans le cas le plus simple où l'au moins un faisceau est un faisceau formant uniquement le repère de limite d'usure, un utilisateur du dispositif peut être confronté à deux situations de mesure :
- soit ledit faisceau est entièrement intercepté par un flanc de la garniture de la plaquette, auquel cas d < dₗᵢₘ : la plaquette présente une épaisseur de garniture supérieure à l'épaisseur critique d'usure et ne doit pas être changée,
- soit ledit faisceau se prolonge au moins partiellement au-delà de la garniture de la plaquette, auquel cas d > dₗᵢₘ : la plaquette présente une épaisseur de garniture inférieure à l'épaisseur critique d'usure et doit être changée.

Le repère de référence peut être mécanique, comme une butée coopérant avec la première surface de contact du disque de frein par exemple, ou peut être optique.

Selon cette dernière configuration, la tête de lecture peut avantageusement comprendre une première source lumineuse émettant un premier faisceau lumineux et une deuxième source lumineuse émettant un deuxième faisceau lumineux parallèle au premier faisceau lumineux, lesdits premier et deuxième faisceaux lumineux étant espacés de la distance dₗᵢₘ prise selon l'axe longitudinal.

Le premier faisceau lumineux par exemple peut avantageusement être aligné en incidence rasante avec la première surface de contact du disque de frein, de sorte à former le repère de référence.

Le deuxième faisceau lumineux peut dès lors former le repère de limite d'usure afin d'apprécier l'état d'usure d'une première garniture, selon l'une ou l'autre des deux situations de mesure présentées plus haut.

Avantageusement, afin d'évaluer un état d'usure d'une deuxième garniture, la tête de lecture peut être déplacée en translation selon l'axe longitudinal de sorte que le deuxième faisceau lumineux soit aligné en incidence rasante avec une deuxième surface de contact du disque de frein opposée à la première surface de contact du disque de frein. Le deuxième faisceau lumineux peut dans ce cas former le repère de référence.

Le premier faisceau lumineux peut alors former le repère de limite d'usure afin d'apprécier l'état d'usure de la deuxième garniture, de façon similaire à ce qui précède.

Selon une possibilité, la tête de lecture comprend une cavité débouchant sur au moins un orifice situé à proximité du dispositif d'émission, ladite cavité étant apte à recevoir un moyen d'imagerie de la zone de mesure tel qu'un endoscope par exemple.

Selon une possibilité, le dispositif comprend en outre une réglette configurée pour coopérer par coulissement selon l'axe longitudinal avec la tête de lecture, de manière à guider la tête de lecture en direction de la zone de mesure.

Un deuxième aspect de l'invention concerne un système destiné à évaluer un état d'usure d'au moins une plaquette de frein. Le système comprend en particulier le dispositif selon le premier aspect de l'invention et un moyen d'imagerie de la zone de mesure.

Un troisième aspect de l'invention concerne un procédé d'évaluation d'usure d'une plaquette de frein mettant en oeuvre le dispositif selon le premier aspect de l'invention. Le procédé comprend notamment au moins les étapes suivantes :
- Introduire la tête de lecture dans un ajournement d'une jante au niveau d'un système de freinage ;
- Déplacer la tête de lecture suivant l'axe longitudinal de sorte à placer le repère de référence dans un plan transverse à l'axe longitudinal comprenant une surface de disque de frein ;
- Visualiser le repère de limite d'usure formé par l'au moins un faisceau lumineux ;
- Evaluer une épaisseur de garniture de la plaquette de frein en regard du disque de frein, en fonction d'une position du repère de limite d'usure vis-à-vis de la garniture.

### BREVE INTRODUCTION DES FIGURES

D'autres caractéristiques, buts et avantages de la présente invention apparaitront à la lecture de la description détaillée qui suit, et en regard des dessins annexés donnés à titre d'exemples non limitatifs et sur lesquels :
- la figure 1 montre en vue trois-quarts un premier mode de réalisation d'une tête de lecture selon l'invention ;
- la figure 2a montre une vue de face de la tête de lecture illustrée à la figure 1 ;
- la figure 2b montre une vue latérale de la tête de lecture illustrée à la figure 1 ;
- la figure 3a montre une vue de face d'un deuxième mode de réalisation d'une tête de lecture selon l'invention ;
- la figure 3b montre une vue latérale d'un deuxième mode de réalisation d'une tête de lecture selon l'invention ;
- la figure 4 montre en vue trois-quarts un troisième mode de réalisation d'une tête de lecture selon l'invention ;
- la figure 5a illustre une roue de véhicule ;
- la figure 5b montre un mode de réalisation du dispositif selon l'invention, selon une coupe A-A illustrée à la figure 5a.

### DESCRIPTION DETAILLEE

L'invention selon son premier aspect comprend notamment les caractéristiques optionnelles ci-après pouvant être utilisées en association ou alternativement :
- le dispositif d'émission comprend l'au moins un élément et le repère de référence est formé par une partie au moins de l'au moins un faisceau lumineux.
- l'au moins un faisceau lumineux comprend un premier faisceau lumineux et un deuxième faisceau lumineux respectivement, lesdits premier et deuxième faisceaux lumineux étant parallèles entre eux et espacés de la distance dₗᵢₘ de sorte à former respectivement l'un parmi le repère de limite d'usure et le repère de référence.
- l'au moins un faisceau lumineux présente un diamètre égal à dₗᵢₘ, de sorte que deux parties diamétralement opposées dudit au moins un faisceau lumineux forment respectivement le repère de limite d'usure et le repère de référence.
- le dispositif comprend en outre un élément de collimation configuré pour collimater l'au moins un faisceau lumineux de diamètre dₗᵢₘ de sorte à former au moins un deuxième faisceau lumineux de diamètre dₗᵢₘ₂ tel que dₗᵢₘ₂ < dₗᵢₘ.
- l'au moins un élément comprend une butée présentant une surface d'appui transverse à l'axe longitudinal, destinée à venir en butée contre un disque de frein, ladite surface d'appui formant un repère de référence.
- la tête de lecture comprend une cavité débouchant sur au moins un orifice situé à proximité du dispositif d'émission, ladite cavité étant apte à recevoir un moyen d'imagerie de la zone de mesure tel qu'un endoscope par exemple.
- la cavité comprend un miroir au niveau de l'orifice, ledit miroir étant configuré pour au moins réfléchir selon l'axe longitudinal une image de la zone de mesure vers le moyen d'imagerie.
- la tête de lecture comprend une lampe à proximité du dispositif d'émission de sorte à éclairer la zone de mesure.
- le dispositif comprend en outre une réglette configurée pour coopérer par coulissement selon l'axe longitudinal avec la tête de lecture, de manière à guider la tête de lecture en direction de la zone de mesure.
- la réglette comprend une surface de butée perpendiculaire à l'axe longitudinal.
- l'au moins un faisceau lumineux comprend au moins un faisceau laser.

L'invention selon son deuxième aspect comprend notamment les caractéristiques optionnelles ci-après pouvant être utilisées en association ou alternativement :
- le moyen d'imagerie est amovible de la tête de lecture.
- le moyen d'imagerie est solidaire de la tête de lecture.

L'invention selon son troisième aspect comprend notamment les caractéristiques optionnelles ci-après pouvant être utilisées en association ou alternativement :
- le placement du repère de référence dans le plan comprenant la surface du disque de frein comprend un alignement en incidence rasante de l'un parmi les premier et deuxième faisceaux lumineux avec ladite surface du disque de frein.
- le placement du repère de référence dans le plan comprenant la surface du disque de frein comprend une mise en butée de la surface d'appui transverse à l'axe longitudinal sur ladite surface du disque de frein.

La présente invention concerne un dispositif destiné à inspecter un état d'usure d'une plaquette de frein. Un principe de ce dispositif repose sur une évaluation optique de la distance entre une surface d'une garniture de plaquette de frein et une surface de disque de frein en regard de la surface de la garniture. En particulier, cette évaluation se fait de préférence sans démonter la roue et/ou le système de freinage, par le biais d'une tête de lecture apte à recevoir un système de visualisation ou comprenant éventuellement ledit système de visualisation. La tête de lecture, par le biais d'au moins une source lumineuse, est configurée pour former un repère au niveau du système de freinage, en particulier sur un flanc de la garniture. Ce repère, dénommé repère de limite d'usure, est formé par interception d'au moins une partie d'un faisceau lumineux issu de la source lumineuse, ledit faisceau se propageant parallèlement aux surfaces du disque et de la garniture. Le repère de limite d'usure est avantageusement distant de la surface du disque d'une distance dₗᵢₘ correspondant à une limite d'usure de la plaquette de frein.

Dans la suite de la description, on entend par :
Faisceau lumineux : un ensemble de rayons de préférence parallèles, collimatés.
Zone de mesure : Une portion de l'espace jouxtant la tête de lecture.
Axe longitudinal, longitudinalement : Selon un axe x d'un repère illustré, dans une direction normale à une surface d'un disque de frein.

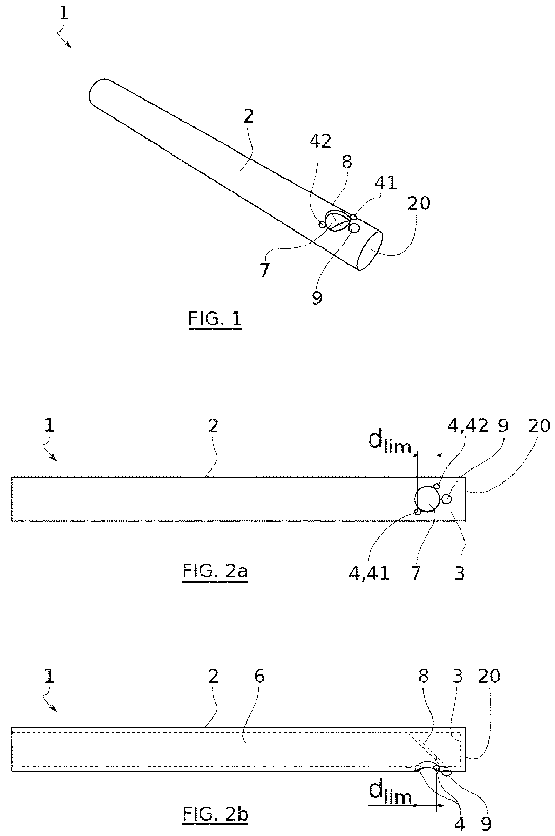

En référence aux figures 1, 2a, 2b et 5b, un premier mode de réalisation d'un dispositif 1 selon l'invention comprend une tête de lecture 2 cylindrique.

La tête de lecture 2 présente de préférence une longueur selon l'axe longitudinal comprise entre 200mm et 300mm et un diamètre compris entre 10mm et 28mm, de sorte à atteindre au moins une zone à proximité d'une plaquette de frein 31, de préférence sans démonter une roue 30 du véhicule masquant partiellement ladite plaquette de frein 31.

Alternativement, la tête de lecture 2 peut présenter au moins une section non cylindrique.

La tête de lecture 2 comprend de préférence une première source lumineuse 41 et une deuxième source lumineuse 42 au niveau de son extrémité distale 3. Ces deux sources lumineuses 41, 42 sont de préférence agencées de manière à présenter une distance dₗᵢₘ entre elles, cette distance étant prise selon un axe longitudinal de la tête de lecture 2.

Les sources lumineuses 41, 42 peuvent donc être placées respectivement au niveau de deux plans transverses, parallèles entre eux, et distants de la distance dₗᵢₘ.

Chaque source est de préférence configurée pour émettre un faisceau lumineux dans une direction orthogonale à l'axe longitudinal. Un premier faisceau émis par la première source 41 peut donc être compris dans un premier plan transverse correspondant à l'un desdits deux plans transverses. Un deuxième faisceau émis par la deuxième source 42 peut de façon similaire être compris dans un deuxième plan transverse correspondant à l'autre desdits deux plans transverses.

Les premier et deuxième faisceaux lumineux sont de préférence parallèles entre eux.

Les sources lumineuses 41, 42 peuvent être des sources primaires ou des sources secondaires. Dans ce dernier cas, une seule source primaire peut générer au moins deux sources secondaires par le biais d'un séparateur par exemple.

Les faisceaux lumineux sont de préférence des faisceaux laser et les sources lumineuses primaires sont de préférence des diodes laser.

La distance dₗᵢₘ correspond de préférence à une valeur limite d'usure des plaquettes 31. Cette valeur peut être fixée de façon prédéterminée, entre 2mm et 8mm, de préférence entre 3mm et 5mm.

Afin d'évaluer l'usure d'une plaquette de frein 31, la distance dₗᵢₘ est à comparer avec une distance d entre une surface de disque de frein 32 et une surface de garniture en regard de ladite surface de disque de frein 32. La distance d est prise selon l'axe longitudinal.

Typiquement, si dₗᵢₘ > d, la plaquette 31 présente un état d'usure admissible. Elle ne nécessite pas d'être changée. Si dₗᵢₘ < d, l'état d'usure de la plaquette 31 est suffisamment important. Un changement de plaquette peut être par conséquent préconisé.

La comparaison de d et dₗᵢₘ est de préférence visuelle.

Pour ce faire, l'une parmi les sources 41, 42 est choisie comme source de référence par un opérateur pour être alignée avec une surface du disque de frein 32 de sorte que le faisceau issu de cette source de référence soit en incidence rasante avec cette surface, l'autre source devenant une source de mesure, dite également source de visée, de sorte que le faisceau issu de cette source de mesure soit émis du côté de la plaquette de frein 31 en regard de ladite surface du disque de frein 32.

Le faisceau issu de la source de référence forme de préférence le repère de référence.

Le faisceau issu de la source de mesure forme de préférence le repère de limite d'usure.

Si le faisceau issu de la source de mesure est entièrement intercepté par un flanc de la garniture de la plaquette 31, cette dernière présente une épaisseur de garniture supérieure à l'épaisseur limite d'usure et ne doit pas être changée.

A contrario, si le faisceau issu de la source de mesure se prolonge au moins partiellement au-delà de la garniture de la plaquette 31, cette dernière présente une épaisseur de garniture inférieure à l'épaisseur limite d'usure et doit être changée.

Afin de visualiser convenablement un positionnement du repère de référence, issu de la source de référence, et une zone de mesure 5 dans laquelle le repère de limite d'usure, issu de la source de mesure, est intercepté, la tête de lecture 2 peut avantageusement comprendre différents éléments améliorant la visualisation.

En particulier, la tête de lecture 2 peut comprendre une lampe 9 à proximité des sources lumineuses 41, 42. La lampe 9 est de préférence configurée pour éclairer la zone de mesure 5. La lampe 9 peut être par exemple une diode blanche présentant une intensité lumineuse comprise entre 20 et 150 lumens.

Une alimentation électrique des sources lumineuses 41, 42 et de la lampe 9 peut de préférence se faire par l'intermédiaire d'un câble électrique au niveau d'une extrémité proximale de la tête de lecture 2.

La tête de lecture 2 peut comprendre une cavité 6 débouchant sur un orifice 7 latéral situé à proximité des sources lumineuses, de manière à permettre la visualisation de la zone de mesure 5.

La cavité 6 peut également déboucher au niveau de l'extrémité proximale de la tête de lecture 2, de manière à permettre le passage d'une fibre optique 11 par exemple.

La cavité 6 peut également comprendre un miroir 8, au niveau de l'orifice 7, agencé sensiblement selon un angle de 45°, de manière à réfléchir une image de la zone de mesure 5 selon l'axe longitudinal.

La cavité 6 est de préférence apte à recevoir un moyen d'imagerie 10, ou moyen de visualisation, tel qu'un endoscope par exemple.

Selon une possibilité, le moyen d'imagerie 10 peut faire partie d'un système comprenant le dispositif 1 destiné à évaluer l'état d'usure d'au moins une plaquette de frein 31.

Le moyen d'imagerie 10 peut être un endoscope d'inspection pour le diagnostic de véhicule.

Il peut comprendre en particulier une fibre optique 11 reliée à un écran 12 déporté.

L'endoscope peut être standard et amovible de la tête de lecture 2.

Alternativement, le moyen d'imagerie 10 peut être solidaire de la tête de lecture 2.

Avantageusement, le système peut comprendre un moyen de connexion radiofréquence, selon les protocoles de communication Wifi™ ou Bluetooth® par exemple, de façon à transmettre des données à un terminal extérieur, par exemple un appareil fonctionnant selon un système Android.

Selon une possibilité, la tête de lecture 2 peut être dépourvue de moyen d'imagerie 10.

Par exemple, la tête de lecture 2 peut comprendre un système d'évaluation destiné à détecter le repère de limite d'usure.

Dans ce cas, il n'est pas nécessaire de recourir à un écran pour visualiser ledit repère de limite d'usure.

Le système d'évaluation peut comprendre un capteur configuré pour capter une réflexion d'au moins une partie de faisceau lumineux.

Dès lors, si la garniture de plaquette de frein 31 réfléchit au moins une partie du faisceau lumineux formant le repère de limite d'usure, le capteur peut être activé pour signifier que l'épaisseur de garniture est suffisante et que par conséquent, la plaquette 31 ne nécessite pas de remplacement.

Si, au contraire, le capteur ne capte pas de réflexion du faisceau lumineux formant le repère de limite d'usure, le capteur peut être inactif, signifiant alors que l'épaisseur de garniture est insuffisante et que par conséquent, la plaquette 31 nécessite d'être remplacée.

Au moins un témoin visuel sur l'extrémité proximale de la tête de lecture 2 peut dès lors suffire à évaluer l'usure de la plaquette 31. Par exemple, l'au moins un témoin visuel peut être une diode verte ou un message « OK » lorsque le capteur est actif. Il peut être une diode rouge ou un message « usé » lorsque le capteur est inactif.

D'autres modes de réalisation du dispositif 1 selon l'invention peuvent être envisagés. Seules les caractéristiques distinctes du premier mode de réalisation sont décrites ci-après, les autres caractéristiques non décrites étant réputées identiques à celles du premier mode de réalisation.

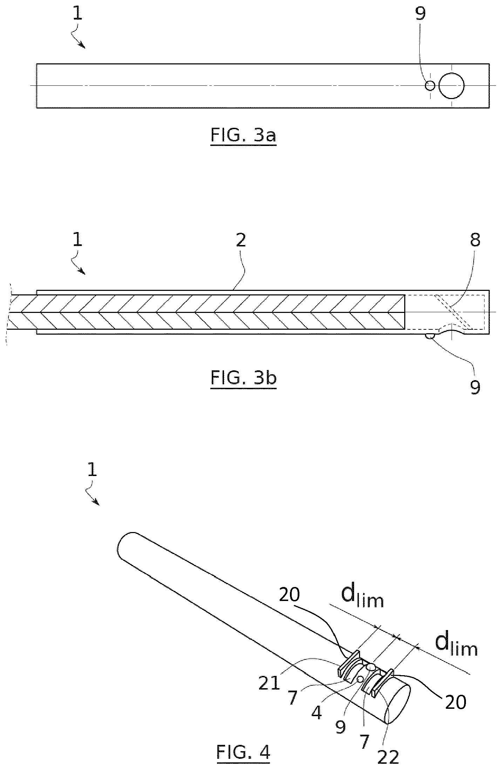

En référence aux figures 3a et 3b, un deuxième mode de réalisation d'un dispositif 1 selon l'invention comprend une source lumineuse 4 située dans la cavité 6.

La source lumineuse 4 peut de préférence émettre un faisceau lumineux selon l'axe longitudinal, de sorte que le miroir 8 réfléchisse ledit faisceau lumineux dans une direction orthogonale à l'axe longitudinal, en direction de la zone de mesure 5.

Dans cette configuration à une seule source lumineuse 4, la source peut être avantageusement dimensionnée pour émettre un faisceau lumineux présentant un diamètre dₗᵢₘ.

Afin d'évaluer l'usure d'une plaquette de frein 31, le faisceau lumineux peut être positionné de manière à ce qu'une première partie dudit faisceau lumineux soit tangente à la surface du disque de frein 32. Une deuxième partie dudit faisceau lumineux diamétralement opposée à la première partie peut dès lors former le repère de limite d'usure.

Selon une possibilité, le dispositif 1 comprend en outre un élément de collimation configuré pour former à partir du faisceau lumineux de diamètre dₗᵢₘ au moins un deuxième faisceau lumineux présentant un diamètre dₗᵢₘ₂.

Le diamètre dₗᵢₘ₂ est de préférence tel que dₗᵢₘ₂ < dₗᵢₘ.

L'élément de collimation peut être une tirette percée d'au moins un trou de diamètre dₗᵢₘ₂ sensiblement égal à 3mm par exemple. Ladite tirette peut être amovible et actionnée par l'utilisateur, afin de bénéficier avantageusement d'au moins deux faisceaux de diamètres différents pour l'évaluation de l'usure de plaquettes de frein. En particulier, les limites d'usure des plaquettes de frein à l'avant et à l'arrière d'un véhicule sont différentes. Il est donc particulièrement avantageux de regrouper au sein du dispositif 1 au moins deux repères de limite d'usure correspondant auxdites limites d'usure de plaquettes de frein avant et arrière par exemple.

La tirette peut également comprendre une pluralité de trous de diamètres différents. L'utilisateur peut dès lors avoir la possibilité de sélectionner des faisceaux lumineux de différents diamètres de manière à affiner l'évaluation d'usure notamment.

L'élément de collimation peut être alternativement un obturateur concentrique par exemple, offrant un réglage continu du diamètre du deuxième faisceau lumineux.

Une molette peut être actionnée par l'utilisateur de manière à régler le diamètre du faisceau lumineux par l'élément de collimation, soit en continu, soit selon certaines valeurs préréglées par exemple.

Selon une possibilité non illustrée issue des deux modes de réalisation précédents, la tête de lecture 2 peut comprendre une première source lumineuse émettant un premier faisceau présentant un diamètre dₗᵢₘ₁, et une deuxième source lumineuse émettant un deuxième faisceau présentant un diamètre dₗᵢₘ₂.

Lesdites première et deuxième sources peuvent en outre être espacées d'une distance dₗᵢₘ₃.

De manière avantageuse, cette configuration peut permettre d'évaluer une distance d entre une surface de disque de frein 32 et une surface de garniture vis-à-vis d'au moins trois valeurs limites d'usure différentes, selon les différentes possibilités de former le repère de limite d'usure et le repère de référence.

D'autres valeurs limite d'usure peuvent en outre être obtenues par combinaison (dₗᵢₘ₁ + dₗᵢₘ₃, ou dₗᵢₘ₁ + dₗᵢₘ₃ + dₗᵢₘ₂ par exemple).

En référence à la figure 4, un troisième mode de réalisation d'un dispositif 1 selon l'invention comprend une tête de lecture 2 comprenant au moins une butée 21, de préférence deux butées 21, 22 présentant chacune une surface d'appui 20.

La surface d'appui 20 est de préférence dans un plan transverse à l'axe longitudinal.

Elle est en outre destinée à venir en butée contre un disque de frein 32, de manière à former un repère de référence mécanique.

La surface d'appui 20 peut donc être avantageusement distante de la source lumineuse 4 de la distance dₗᵢₘ.

Selon que l'évaluation de l'état d'usure concerne la première plaquette ou la deuxième plaquette, l'une parmi les deux butées 21, 22 peut être positionnée contre l'une parmi les première et deuxième surfaces du disque de frein 32 respectivement en regard de la première et de la deuxième plaquette.

De manière à translater librement la tête de lecture 2 selon l'axe longitudinal, les butées 21, 22 sont de préférence limitées dans le plan transverse par un secteur angulaire compris entre 40° et 120°.

Au moins une rotation de la tête de lecture 2 autour de l'axe longitudinal en combinaison avec au moins une translation de la tête de lecture 2 selon l'axe longitudinal peut avantageusement permettre de déplacer la tête de lecture 2 depuis une première zone de mesure comprenant la première plaquette jusqu'à une deuxième zone de mesure comprenant la deuxième plaquette.

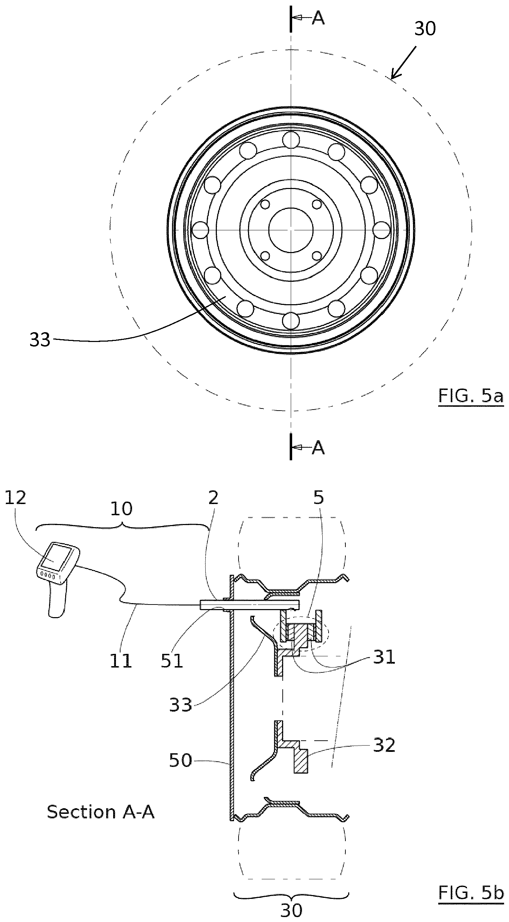

En référence aux figures 5a et 5b, le dispositif 1 peut comprendre une réglette 50 configurée pour coopérer par coulissement selon l'axe longitudinal avec la tête de lecture 2, de manière à guider la tête de lecture 2 au niveau d'un ajournement d'une jante 33 d'une roue 30, en direction de la zone de mesure 5.

En particulier, la réglette 50 comprend avantageusement une surface de butée perpendiculaire à l'axe longitudinal, de sorte à venir en butée contre un flanc extérieur de la roue 30.

Cette réglette 50 comprend de préférence un passage 51 configuré pour guider la tête de lecture 2 selon l'axe longitudinal.

Le passage 51 peut comprendre au moins une rainure par exemple, de sorte à laisser passer des parties saillantes de la tête de lecture 2. L'au moins une rainure peut également être configurée pour coopérer avec un ergot de la tête de lecture 2 par exemple, de manière à guider la tête de lecture 2 en translation uniquement.

La tête de lecture 2 peut ainsi être introduite dans le passage 51, par l'une ou l'autre des extrémités dudit passage 51, de façon à être maintenue perpendiculairement à la réglette 50, tout en permettant un coulissement libre selon l'axe longitudinal.

La réglette 50 peut ainsi être une partie complémentaire du dispositif 1 facilitant le positionnement et le maintien de la tête de lecture 2 dans une position de mesure.

Un procédé d'évaluation d'usure d'une plaquette de frein 31 mettant en oeuvre le dispositif 1 selon l'invention peut de préférence comprendre les étapes suivantes :
- optionnellement, placer la réglette 50 contre le flanc extérieur de la roue 30 correspondant à la plaquette de frein 31 à inspecter, de sorte que le passage 51 coïncide avec un ajournement de la jante 33 en regard d'un dégagement à proximité du système de freinage,
- optionnellement, avant ou après le placement de la réglette 50, introduire la tête de lecture 2 dans le passage 51,
- déplacer la tête de lecture 2 en translation selon l'axe longitudinal au niveau d'un ajournement de la jante 33 en regard d'un dégagement à proximité du système de freinage,
- avant ou après le déplacement de la tête de lecture 2, introduire la fibre optique 11 de l'endoscope dans la cavité 6 de la tête de lecture 2,
- allumer la lampe 9 et l'au moins un faisceau lumineux,
- déplacer finement la tête de lecture 2 suivant l'axe longitudinal de sorte à placer le repère de référence dans un plan transverse à l'axe longitudinal comprenant la surface du disque de frein 32 en regard de la plaquette à inspecter,
- visualiser sur l'écran 12 de l'endoscope le repère de limite d'usure formé par l'au moins un faisceau lumineux,
- évaluer une épaisseur de garniture de la plaquette de frein 31, en fonction de la position du repère de limite d'usure vis-à-vis de la garniture,
- optionnellement, déplacer la tête de lecture 2 de sorte à atteindre une zone de mesure 5 comprenant la deuxième plaquette de frein 31, afin de l'inspecter à son tour.

L'invention n'est pas limitée aux modes de réalisation précédemment décrits mais s'étend à tous modes de réalisation entrant dans la portée des revendications. Chaque mode de réalisation illustré et décrit présente des aspects de l'invention pouvant, sauf indication contraire, être mis en oeuvre dans le contexte des autres modes de réalisation. Par exemple, des éléments de butée peuvent être combinés avec des éléments lumineux pour former des repères de référence.

Par exemple, la tête de lecture 2 peut comprendre une pluralité de sources lumineuses 4 régulièrement espacées formant une graduation, de sorte à évaluer plus précisément différents niveaux d'usure de la plaquette de frein 31.

### REFERENCES

- 1.: Dispositif
- 2.: Tête de lecture
- 3.: Portion distale
- 4.: Source lumineuse
- 41.: Première source lumineuse
- 42.: Deuxième source lumineuse
- 5.: Zone de mesure
- 6.: Cavité
- 7.: Orifice
- 8.: Miroir
- 9.: Lampe
- 10.: Moyen d'imagerie
- 11.: Fibre optique
- 12.: Ecran
- 20.: Surface d'appui
- 21, 22.: Butées
- 30.: Roue
- 31.: Plaquette de frein
- 32.: Disque de frein
- 33.: Jante
- 50.: Réglette
- 51.: Passage

## Revendications

1. Dispositif (1) destiné à évaluer un état d'usure d'au moins une plaquette de frein (31), **caractérisé en ce qu'**il comprend une tête de lecture (2) s'étendant selon un axe longitudinal, ladite tête de lecture (2) comprenant au niveau d'une portion distale (3) :
- un dispositif d'émission (4) configuré pour émettre perpendiculairement à l'axe longitudinal au moins un faisceau lumineux en direction d'une zone de mesure (5), ledit au moins un faisceau lumineux formant au moins un repère de limite d'usure,
- au moins un élément configuré pour former un repère de référence, ledit repère de référence étant distant du repère de limite d'usure d'une distance dₗᵢₘ prise selon l'axe longitudinal.

2. Dispositif (1) selon la revendication précédente dans lequel le dispositif d'émission (4) comprend l'au moins un élément et le repère de référence est formé par une partie au moins de l'au moins un faisceau lumineux

3. Dispositif (1) selon la revendication précédente dans lequel l'au moins un faisceau lumineux comprend un premier faisceau lumineux et un deuxième faisceau lumineux respectivement, lesdits premier et deuxième faisceaux lumineux étant parallèles entre eux et espacés de la distance dₗᵢₘ de sorte à former respectivement l'un parmi le repère de limite d'usure et le repère de référence.

4. Dispositif (1) selon la revendication 2 dans lequel l'au moins un faisceau lumineux présente un diamètre égal à dₗᵢₘ, de sorte que deux parties diamétralement opposées dudit au moins un faisceau lumineux forment respectivement le repère de limite d'usure et le repère de référence.

5. Dispositif (1) selon la revendication précédente comprenant en outre un élément de collimation configuré pour collimater l'au moins un faisceau lumineux de diamètre dₗᵢₘ de sorte à former au moins un deuxième faisceau lumineux de diamètre dₗᵢₘ₂ tel que dₗᵢₘ₂ < dₗᵢₘ.

6. Dispositif (1) selon l'une quelconque des revendications précédentes dans lequel l'au moins un élément comprend une butée (21) présentant une surface d'appui (20) transverse à l'axe longitudinal, destinée à venir en butée contre un disque de frein (32), ladite surface d'appui (20) formant un repère de référence.

7. Dispositif (1) selon l'une quelconque des revendications précédentes dans lequel la tête de lecture (2) comprend une cavité (6) débouchant sur au moins un orifice (7) situé à proximité du dispositif d'émission (4), ladite cavité (6) étant apte à recevoir un moyen d'imagerie (10) de la zone de mesure (5) tel qu'un endoscope par exemple.

8. Dispositif (1) selon la revendication précédente dans lequel la cavité (6) comprend un miroir (8) au niveau de l'orifice, ledit miroir étant configuré pour au moins réfléchir selon l'axe longitudinal une image de la zone de mesure (5) vers le moyen d'imagerie (10).

9. Dispositif (1) selon l'une quelconque des revendications précédentes dans lequel la tête de lecture (2) comprend une lampe (9) à proximité du dispositif d'émission (4) de sorte à éclairer la zone de mesure (5).

10. Dispositif (1) selon l'une quelconque des revendications précédentes comprenant en outre une réglette (50) configurée pour coopérer par coulissement selon l'axe longitudinal avec la tête de lecture (2), de manière à guider la tête de lecture (2) en direction de la zone de mesure (5).

11. Dispositif (1) selon la revendication précédente dans lequel la réglette (50) comprend une surface de butée perpendiculaire à l'axe longitudinal.

12. Système destiné à évaluer un état d'usure d'au moins une plaquette de frein (31) comprenant un dispositif (1) selon l'une quelconque des revendications précédentes et un moyen d'imagerie (10) de la zone de mesure (5).

13. Procédé d'évaluation d'usure d'une plaquette de frein (31) mettant en oeuvre le dispositif (1) selon l'une quelconque des revendications 1 à 11 ou un système selon la revendication précédente, comprenant au moins les étapes suivantes :
- Introduire la tête de lecture (2) dans un ajournement d'une jante (33) au niveau d'un système de freinage,
- Déplacer la tête de lecture (2) suivant l'axe longitudinal de sorte à placer le repère de référence dans un plan transverse à l'axe longitudinal comprenant une surface de disque de frein (32),
- Visualiser le repère de limite d'usure formé par l'au moins un faisceau lumineux,
- Evaluer une épaisseur de garniture de la plaquette de frein (31) en regard du disque de frein (32), en fonction d'une position du repère de limite d'usure vis-à-vis de la garniture.

14. Procédé d'évaluation d'usure d'une plaquette de frein (31) selon la revendication précédente mettant en oeuvre le dispositif (1) selon la revendication 3, dans lequel :
- Le placement du repère de référence dans le plan comprenant la surface du disque de frein (32) comprend un alignement en incidence rasante de l'un parmi les premier et deuxième faisceaux lumineux avec ladite surface du disque de frein (32).

15. Procédé d'évaluation d'usure d'une plaquette de frein (31) selon la revendication 13 mettant en oeuvre le dispositif (1) selon la revendication 6, dans lequel :
- Le placement du repère de référence dans le plan comprenant la surface du disque de frein (32) comprend une mise en butée de la surface d'appui (20) transverse à l'axe longitudinal sur ladite surface du disque de frein (32).

## Patentansprüche

1. Vorrichtung (1) zum Beurteilen eines Verschleißzustands mindestens eines Bremsbelags (31), **dadurch gekennzeichnet, dass** sie einen entlang einer Längsachse verlaufenden Lesekopf (2) umfasst, wobei der Lesekopf (2) an einem distalen Abschnitt (3) Folgendes umfasst:
- eine Sendeeinrichtung (4), die dazu konfiguriert ist, mindestens einen Lichtstrahl senkrecht zur Längsachse in Richtung eines Messbereichs (5) auszusenden, wobei der mindestens eine Lichtstrahl mindestens eine Verschleißbegrenzungsmarke bildet,
- mindestens ein Element, das konfiguriert ist, um eine Referenzmarke zu bilden, wobei die Referenzmarke von der Verschleißbegrenzungsmarke um einen Abstand dₗᵢₘ entlang der Längsachse entfernt ist.

2. Vorrichtung (1) nach dem vorhergehenden Anspruch, wobei die Sendeeinrichtung (4) das mindestens eine Element umfasst und die Referenzmarke von mindestens einem Teil des mindestens einen Lichtstrahls gebildet ist.

3. Vorrichtung (1) nach dem vorhergehenden Anspruch, wobei der mindestens eine Lichtstrahl einen ersten Lichtstrahl bzw. einen zweiten Lichtstrahl umfasst, wobei der erste und der zweite Lichtstrahl zueinander parallel und um den Abstand dₗᵢₘ derart beabstandet sind, dass sie jeweils eine von der Verschleißbegrenzungsmarke und der Referenzmarke bilden.

4. Vorrichtung (1) nach Anspruch 2, wobei der mindestens eine Lichtstrahl einen Durchmesser gleich dₗᵢₘ hat, so dass zwei diametral gegenüberliegende Teile des mindestens einen Lichtstrahls jeweils die Verschleißbegrenzungsmarke und die Referenzmarke bilden.

5. Vorrichtung (1) nach dem vorhergehenden Anspruch, ferner umfassend ein Kollimationselement, das konfiguriert ist, um den mindestens einen Lichtstrahl mit dem Durchmesser dₗᵢₘ derart zu kollimieren, dass mindestens ein zweiter Lichtstrahl mit dem Durchmesser dₗᵢₘ₂ gebildet wird, so dass dₗᵢₘ₂ < dₗᵢₘ. ist.

6. Vorrichtung (1) nach einem der vorhergehenden Ansprüche, wobei das mindestens eine Element einen Anschlag (21) mit einer quer zur Längsachse verlaufenden Auflagefläche (20) umfasst, die dazu bestimmt ist, an einer Bremsscheibe (32) in Anschlag zu kommen, wobei die Auflagefläche (20) eine Referenzmarke bildet.

7. Vorrichtung (1) nach einem der vorhergehenden Ansprüche, wobei der Lesekopf (2) einen Hohlraum (6) umfasst, der sich in mindestens eine Öffnung (7) öffnet, die sich in der Nähe der Sendeeinrichtung (4) befindet, wobei der Hohlraum (6) ein bildgebendes Mittel (10) des Messbereichs (5), wie beispielsweise ein Endoskop, aufnehmen kann.

8. Vorrichtung (1) nach dem vorhergehenden Anspruch, wobei der Hohlraum (6) einen Spiegel (8) an der Öffnung umfasst, wobei der Spiegel so konfiguriert ist, dass er zumindest entlang der Längsachse ein Bild des Messbereichs (5) zu dem bildgebenden Mittel (10) reflektiert.

9. Vorrichtung (1) nach einem der vorhergehenden Ansprüche, wobei der Lesekopf (2) eine Lampe (9) in der Nähe der Sendeeinrichtung (4) umfasst, um den Messbereich (5) zu beleuchten.

10. Vorrichtung (1) nach einem der vorhergehenden Ansprüche, ferner umfassend eine Trägerleiste (50), die so konfiguriert ist, dass sie durch Gleiten entlang der Längsachse mit dem Lesekopf (2) zusammenwirkt, um den Lesekopf (2) in Richtung des Messbereichs (5) zu führen.

11. Vorrichtung (1) nach dem vorhergehenden Anspruch, wobei die Trägerleiste (50) eine Anschlagfläche senkrecht zur Längsachse umfasst.

12. System zum Beurteilen eines Verschleißzustands mindestens eines Bremsbelags (31), umfassend eine Vorrichtung (1) nach einem der vorhergehenden Ansprüche und ein bildgebendes Mittel (10) für den Messbereich (5).

13. Verfahren zum Beurteilen des Verschleißes eines Bremsbelags (31) unter Verwendung der Vorrichtung (1) nach einem der Ansprüche 1 bis 11 oder eines Systems nach dem vorhergehenden Anspruch, umfassend mindestens die folgenden Schritte:
- Einsetzen des Lesekopfes (2) in eine Aufnahme einer Felge (33) an einem Bremssystem,
- Verschieben des Lesekopfes (2) entlang der Längsachse, um die Referenzmarke in einer Ebene quer zur Längsachse anzuordnen, die eine Oberfläche der Bremsscheibe (32) umfasst,
- Anzeigen der von dem mindestens einen Lichtstrahl gebildeten Verschleißbegrenzungsmarke,
- Beurteilen einer Dicke des Besatzes des der Bremsscheibe (32) zugewandten Bremsbelags (31) in Abhängigkeit von einer Position der Verschleißbegrenzungsmarke in Bezug auf den Besatz.

14. Verfahren zum Beurteilen des Verschleißes eines Bremsbelags (31) nach dem vorhergehenden Anspruch unter Verwendung der Vorrichtung (1) nach Anspruch 3, wobei:
- das Anordnen der Referenzmarke in der Ebene, die die Oberfläche der Bremsscheibe (32) umfasst, eine Ausrichtung des ersten oder des zweiten Lichtstrahls mit der Oberfläche der Bremsscheibe (32) in streifendem Einfall umfasst.

15. Verfahren zum Beurteilen des Verschleißes eines Bremsbelags (31) nach Anspruch 13 unter Verwendung der Vorrichtung (1) nach Anspruch 6, wobei:
- das Anordnen der Referenzmarke in der Ebene, die die Oberfläche der Bremsscheibe (32) umfasst, das Anschlagen der Auflagefläche (20) quer zur Längsachse auf der Oberfläche der Bremsscheibe (32) umfasst.

## Claims

1. Device (1) for assessing a state of wear of at least one brake pad (31), **characterized in that** it comprises a read head (2) extending along a longitudinal axis, said read head (2) comprising at a distal portion (3):
- an emission device (4) configured to emit at least one light beam perpendicularly to the longitudinal axis in the direction of a measurement region (5), said at least one light beam forming at least one wear limit mark,
- at least one element configured to form a reference mark, said reference mark being distant from the wear limit mark by a distance dₗᵢₘ taken along the longitudinal axis.

2. Device (1) according to the preceding claim, wherein the emission device (4) comprises the at least one element and the reference mark is formed by at least part of the at least one light beam.

3. Device (1) according to the preceding claim, wherein the at least one light beam comprises a first light beam and a second light beam respectively, said first and second light beams being mutually parallel and spaced apart by the distance dₗᵢₘ so as to form one of the wear limit mark and the reference mark, respectively.

4. Device (1) according to claim 2, wherein the at least one light beam has a diameter equal to dₗᵢₘ such that two diametrically opposed parts of said at least one light beam respectively form the wear limit mark and the mark reference.

5. Device (1) according to the preceding claim, further comprising a collimating element configured to collimate the at least one light beam of diameter dₗᵢₘ so as to form at least one second light beam of diameter dₗᵢₘ₂ such that dₗᵢₘ₂ < dₗᵢₘ.

6. Device (1) according to any of the preceding claims, wherein the at least one element comprises a stop (21) having a bearing surface (20) transverse to the longitudinal axis and intended to come into abutment against a disk brake (32), said bearing surface (20) forming a reference mark.

7. Device (1) according to any of the preceding claims, wherein the read head (2) comprises a cavity (6) opening into at least one opening (7) located near the emission device (4), said cavity (6) being capable of receiving an imaging means (10) of the measurement region (5) such as an endoscope, for example.

8. Device (1) according to the preceding claim, wherein the cavity (6) comprises a mirror (8) at the opening, said mirror being configured to at least reflect an image of the measurement region (5) along the longitudinal axis toward the imaging means (10).

9. Device (1) according to any of the preceding claims, wherein the read head (2) comprises a lamp (9) near the emission device (4) so as to illuminate the measurement region (5).

10. Device (1) according to any of the preceding claims, further comprising a strip (50) configured to interact with the read head (2) by sliding along the longitudinal axis so as to guide the read head (2) in the direction of the measurement region (5).

11. Device (1) according to the preceding claim, wherein the strip (50) comprises a stop surface perpendicular to the longitudinal axis.

12. System for assessing a state of wear of at least one brake pad (31), comprising a device (1) according to any of the preceding claims and an imaging means (10) of the measurement region (5).

13. Method for assessing the wear of a brake pad (31) using the device (1) according to any of claims 1 to 11 or a system according to the preceding claim, comprising at least the following steps:
- inserting the read head (2) in a recess of a rim (33) at a braking system,
- moving the read head (2) along the longitudinal axis so as to place the reference mark in a plane transverse to the longitudinal axis comprising a brake disk surface (32),
- viewing the wear limit mark formed by the at least one light beam,
- assessing the thickness of the lining of the brake pad (31) opposite the brake disk (32) according to a position of the wear limit mark with respect to the lining.

14. Method for assessing the wear of a brake pad (31) according to the preceding claim using the device (1) according to claim 3, wherein:
- placing the reference mark in the plane including the surface of the brake disk (32) comprises grazing incidence alignment of one of the first and second light beams with said surface of the brake disk (32).

15. Method for assessing the wear of a brake pad (31) according to claim 13 using the device (1) according to claim 6, wherein:
- placing the reference mark in the plane comprising the surface of the brake disk (32) comprises an abutment of the bearing surface (20) transverse to the longitudinal axis on said surface of the brake disk (32).
